# FASCICULE DE BREVET EUROPEEN

(11) **EP 4 004 353 B1**
(45) Date de publication et mention de la délivrance du brevet: **24.05.2023**
(21) Numéro de dépôt: 20737438.0
(22) Date de dépôt: 07.07.2020
(51) Int. Cl.: F02C 6/04, F02C 9/50

(54) **PROCÉDÉ ET SYSTÈME DE CONTRÔLE DE RÉGIME DE RALENTI ET DE PRÉLÈVEMENT DE PUISSANCE PRODUITE PAR UN MOTEUR D'AÉRONEF**
VERFAHREN UND SYSTEM ZUR STEUERUNG DER LEERLAUFDREHZAHL UND DER PTO-LEISTUNG, DIE VON EINEM FLUGZEUGMOTOR ERZEUGT WIRD
METHOD AND SYSTEM FOR CONTROLLING THE IDLING SPEED AND THE POWER TAKE-OFF OF THE POWER PRODUCED BY AN AIRCRAFT ENGINE

(30) Priorité: 29.07.2019 FR 1908596
(43) Date de publication de la demande: 01.06.2022
(73) Titulaire: Airbus (S.A.S.), 31700 Blagnac (FR); AIRBUS OPERATIONS (S.A.S.), 31060 Toulouse (FR)
(72) Inventeur: RAPIN, Nicolas, 31060 TOULOUSE Cedex 9 (FR); POIRIER, Didier, 31700 BLAGNAC (FR); FOCH, Etienne, 31060 TOULOUSE Cedex 9 (FR); ROUX, Paul-Emile, 31060 TOULOUSE Cedex 9 (FR); ESCORIHUELA, Emmanuelle, 31060 TOULOUSE Cedex 9 (FR); BARNIER, Caroline, 31060 TOULOUSE Cedex 9 (FR); ALIX, Guillaume, 31060 TOULOUSE Cedex 9 (FR)
(74) Mandataire: Sarraméa, Claude
(86) Numéro de dépôt international: PCT/EP2020/069121
(87) Numéro de publication internationale: WO 2021/018524

(56) Documents cités:
- EP-A1- 3 045 696
- US-A1- 2018 163 734

## Description

### DOMAINE TECHNIQUE

La présente invention concerne un procédé et un système de contrôle du régime de ralenti et des prélèvements de la puissance produite par un moteur d'aéronef.

### ÉTAT DE LA TECHNIQUE

Bien que non exclusivement, la présente invention s'applique aux turbomachines de propulsions d'aéronef, en particulier d'avion de transport.

Les turbomachines de propulsion d'aéronef, ci-après appelées « moteurs », comprennent un ou plusieurs compresseurs qui aspirent et compriment de l'air pour l'envoyer dans une ou plusieurs chambres de combustion. L'air dilaté par les chambres de combustion traverse, par la suite, une ou plusieurs turbines qui entraînent, à l'aide d'un arbre rotatif, le ou les compresseurs ainsi que tous les éléments nécessaires au fonctionnement du moteur. Lorsque le régime de rotation est suffisant, le moteur fonctionne de façon autonome pour atteindre son régime de ralenti.

Bien que la majorité de la puissance produite par le moteur soit utilisée pour la propulsion de l'aéronef, une partie de cette puissance est prélevée pour le fonctionnement de certains systèmes de l'aéronef. Les prélèvements de puissance peuvent être hydrauliques, électriques ou pneumatiques. La puissance hydraulique sert principalement à alimenter les commandes de vol de l'aéronef, les systèmes d'extension et de rétraction des trains d'atterrissage, etc. La puissance électrique sert principalement à alimenter les systèmes de divertissement des passagers, l'avionique, l'éclairage, etc. La puissance pneumatique sert à alimenter le système de pressurisation et de conditionnement d'air en cabine, le système de protection de la voilure et de nacelles contre le givre et le démarrage des moteurs. Elle est obtenue par prélèvement d'une partie de l'air comprimé par le ou les compresseurs ce qui réduit le débit d'air.

Par ailleurs, certains moteurs tels que les moteurs à très haut taux de dilution sont envisagés et étudiés afin d'être intégrés dans les futurs aéronefs. Le fonctionnement de ce type de moteur est optimisé afin de diminuer la consommation de carburant des aéronefs. Pour cela, la taille de la partie du moteur sur laquelle est prélevée la puissance mécanique nécessaire à l'aéronef est réduite. Une telle réduction rend le prélèvement de puissance de plus en plus contraignant, notamment dans un régime de ralenti, ce qui augmente le risque d'apparition d'un phénomène de « pompage ».

En effet, au cours de son fonctionnement, un compresseur peut subir un décrochage aérodynamique. Ce phénomène, également appelé « pompage », est engendré par une différence de pression trop importante entre la partie de basse pression et la partie de haute pression d'un compresseur. Plus particulièrement, l'air de la partie de haute pression du compresseur est refoulé dans la partie de basse pression. Ces variations de débit d'air engendrent une baisse des performances du moteur ainsi qu'une usure des compresseurs.

Pour éviter le risque de pompage, il est possible d'augmenter le niveau de ralenti afin que le moteur puisse fournir une puissance adéquate. Cependant, l'augmentation du régime de ralenti entraîne une augmentation de la poussée moteur, ce qui peut engendrer des impacts opérationnels sur l'usure des freins au sol, sur le bruit, sur la consommation de carburant de l'aéronef, etc.

Il est également possible de limiter le niveau de ralenti en minimisant les prélèvements de puissance sur le moteur, mais contraindre les systèmes de l'aéronef conduit potentiellement à ne pas utiliser le maximum de leur potentiel.

Une autre possibilité consiste à augmenter la taille du corps du moteur pour les besoins de prélèvement de puissance. Cela revient à ne pas optimiser le moteur afin de garantir son opérabilité, avec une hausse de la consommation de carburant de l'aéronef.

Le document US 2018/163734 divulgue un procédé de contrôle du régime d'une turbomachine lors du décollage d'un aéronef.

Un système de commande pour un moteur à turbine à gaz comprenant une turbine de puissance est décrit dans le document EP 3 045 696.

Aucune des solutions précédentes n'est donc complètement satisfaisante pour les applications envisagées.

En outre, les besoins en puissance électrique dans les aéronefs vont croissants, que ce soit pour le confort des passagers ou pour des systèmes d'aéronefs plus performants. Cette tendance accentue les risques mentionnés ci-dessus.

### EXPOSÉ DE L'INVENTION

La présente invention a pour objet de remédier à cet inconvénient.

Elle concerne un procédé de contrôle de régime de ralenti et de prélèvement de puissance, ladite puissance étant produite par au moins un moteur d'aéronef.

Selon l'invention, le procédé comprend la succession d'étapes suivantes :
- une première étape de détermination mise en oeuvre par une première unité de détermination, consistant à déterminer au moins une valeur de puissance disponible courante à partir de données de capacités de prélèvement de puissance courantes sur ledit au moins un moteur de l'aéronef et sur au moins une source de puissance auxiliaire ;
- une deuxième étape de détermination, mise en oeuvre par une deuxième unité de détermination, consistant à déterminer au moins une valeur de puissance consommée courante à partir de données de puissance courantes représentatives des besoins de puissance d'au moins un système consommateur de l'aéronef ;
- une troisième étape de détermination, mise en oeuvre par une troisième unité de détermination, consistant à déterminer au moins une valeur de variation de puissance requise à un temps ultérieur, à partir de données de puissance estimées par ledit au moins un système consommateur et desdites données de puissance courantes, lesdites données de puissance estimées étant représentatives des besoins de puissance dudit au moins un système consommateur à un temps ultérieur ;
- une première étape de calcul, mise en oeuvre par une première unité de calcul, consistant à calculer au moins une valeur de puissance totale requise estimée au temps ultérieur à partir de ladite au moins une valeur de puissance consommée courante et de ladite au moins une valeur de variation de puissance requise ;
- une deuxième étape de calcul, mise en oeuvre par une deuxième unité de calcul, consistant à calculer au moins une valeur de puissance disponible estimée au temps ultérieur à partir de ladite au moins une valeur de puissance disponible courante, d'au moins une valeur de prélèvement pneumatique estimée au temps ultérieur et en fonction d'au moins un critère d'estimation ;
- une étape d'optimisation, mise en oeuvre par une unité d'optimisation, consistant à déterminer un résultat d'optimisation par la comparaison de ladite au moins une valeur de puissance totale requise estimée avec au moins une valeur de puissance associée à au moins un critère d'optimisation ; et
- une étape de commande, mise en oeuvre par une unité de commande, consistant à émettre un ordre d'adaptation d'un ralenti dudit au moins un moteur, un ordre d'adaptation de la puissance totale requise estimée au temps ultérieur ou aucun ordre en fonction du résultat d'optimisation.

Ainsi, grâce à l'invention, il est possible d'adapter le ralenti du moteur aux prélèvements de puissance ou inversement, le prélèvement de puissance au niveau de ralenti moteur, selon les priorités définies par l'invention (en fonction de la phase de vol et de la stratégie sélectionnée par le pilote) très rapidement. L'adaptation du ralenti dépend, ainsi, des besoins des systèmes consommateurs et de leurs capacités à les réduire temporairement. Avantageusement, le procédé comprend une étape de gestion de puissance, mise en oeuvre par une unité de gestion de puissance après la deuxième étape de détermination, ladite étape de gestion de puissance comprenant la succession de sous-étapes suivantes :
- une première sous-étape d'acquisition, mise en oeuvre par un premier module d'acquisition, consistant à acquérir au moins une valeur de puissance chargée courante et un état de charge courant d'une source de puissance secondaire ;
- une première sous-étape de calcul, mise en oeuvre par un premier module de calcul, consistant à calculer au moins une valeur de différence de puissance courante entre ladite au moins une valeur de puissance disponible courante et ladite au moins une valeur de puissance consommée courante ;
- une sous-étape de décision, mise en oeuvre par un module de décision, consistant à :
   - émettre un ordre de charge de la source secondaire, si ladite au moins une valeur de différence de puissance courante est positive ou nulle ;
   - transmettre, à la source secondaire, un ordre de fournir au moins une valeur de puissance chargée égale à ladite au moins une valeur de différence de puissance courante, si ladite au moins une valeur de différence de puissance courante est négative et si ladite au moins une valeur de puissance chargée de la source secondaire est supérieure à ladite au moins une valeur de différence de puissance courante ; et
   - transmettre, à ladite source secondaire, un ordre de fournir l'intégralité de la puissance chargée et transmettre un ordre de limitation transitoire de la puissance consommée courante audit au moins un système consommateur, si ladite au moins une valeur de différence de puissance courante est négative et si ladite au moins une valeur de puissance chargée de la source secondaire est inférieure à ladite au moins une valeur de différence de puissance courante.

De préférence, l'étape d'optimisation comprend également une sous-étape d'identification, mise en oeuvre par un module d'identification, consistant à identifier au moins une valeur de puissance requise réduite à un temps ultérieur à partir de données de limitation d'au moins un besoin de puissance dudit au moins un système consommateur.

Par ailleurs, avantageusement, le procédé comprend également une étape de contrôle de prélèvement pneumatique, mise en oeuvre par une unité de contrôle de prélèvement pneumatique en amont de la deuxième étape de calcul, ladite étape de contrôle comprenant la succession de sous-étapes suivantes :
- une deuxième sous-étape d'acquisition, mise en oeuvre par un deuxième module d'acquisition, consistant à acquérir des données de prélèvement pneumatique courantes associées à une quantité de prélèvement pneumatique courant sur ledit au moins un moteur de l'aéronef et sur ladite au moins une source auxiliaire ;
- une troisième sous-étape d'acquisition, mise en oeuvre par un troisième module d'acquisition, consistant à acquérir des informations d'arrêt de prélèvement pneumatique si une requête d'arrêt de prélèvement pneumatique est reçue par au moins un système de prélèvement ;
- une seconde sous-étape de calcul, mise en oeuvre par un second module de calcul, consistant à calculer au moins une valeur de prélèvement pneumatique estimée au temps ultérieur à partir des données de prélèvement pneumatique courantes et des informations d'arrêt de prélèvement pneumatique ; et
- une sous-étape de commande, mise en oeuvre par un module de commande, consistant à commander l'arrêt du prélèvement pneumatique au temps ultérieur par ledit au moins un système de prélèvement en fonction des informations d'arrêt de prélèvement automatique.

De préférence, lesdits besoins de puissance d'au moins un système consommateur comprennent, au moins :
- des besoins de puissance à gestion décentralisée ;
- des besoins de puissance essentiels au fonctionnement d'au moins un système consommateur et non prévisibles temporellement ;
- des besoins de puissance essentiels au fonctionnement d'au moins un système consommateur et prévisibles temporellement ; et
- des besoins de puissance qui ne sont pas essentiels au fonctionnement d'au moins un système consommateur et non prévisibles temporellement.

La présente invention concerne également un système contrôle de régime de ralenti et de prélèvement de puissance, ladite puissance étant produite par au moins un moteur d'aéronef.

Selon l'invention, le système comporte :
- une première unité de détermination configurée pour déterminer au moins une valeur de puissance disponible courante à partir de données de capacités de prélèvement de puissance courantes sur ledit au moins un moteur de l'aéronef et sur au moins une source de puissance auxiliaire ;
- une deuxième unité de détermination configurée pour déterminer au moins une valeur de puissance consommée courante à partir de données de puissance courantes représentatives des besoins de puissance d'au moins un système consommateur de l'aéronef ;
- une troisième unité de détermination configurée pour déterminer au moins une valeur de variation de puissance requise à un temps ultérieur, à partir de données de puissance estimées par ledit au moins un système consommateur et desdites données de puissance courantes, lesdites données de puissance estimées étant représentatives des besoins de puissance dudit au moins un système consommateur à un temps ultérieur ;
- une première unité de calcul configurée pour calculer au moins une valeur de puissance totale requise estimée au temps ultérieur à partir de ladite au moins une valeur de puissance consommée courante et de ladite au moins une valeur de variation de puissance requise ;
- une deuxième unité de calcul configurée pour calculer au moins une valeur de puissance disponible estimée au temps ultérieur à partir de ladite au moins une valeur de puissance disponible courante, d'au moins une valeur de prélèvement pneumatique estimée au temps ultérieur et en fonction d'au moins un critère d'estimation ;
- une unité d'optimisation configurée pour déterminer un résultat d'optimisation par la comparaison de ladite au moins une valeur de puissance totale requise estimée avec au moins une valeur de puissance associée à au moins un critère d'optimisation ; et
- une unité de commande configurée pour émettre un ordre d'adaptation d'un ralenti dudit au moins un moteur, un ordre d'adaptation de la puissance totale requise estimée au temps ultérieur ou aucun ordre en fonction du résultat d'optimisation.

Avantageusement, le système comporte une unité de gestion de puissance comportant :
- un premier module d'acquisition configuré pour acquérir au moins une valeur de puissance chargée courante et un état de charge courant d'une source de puissance secondaire ;
- un premier module de calcul configuré pour calculer au moins une valeur de différence de puissance courante entre ladite au moins une valeur de puissance disponible courante et ladite au moins une valeur de puissance consommée courante ;
- un module de décision configuré pour :
   - émettre un ordre de charge de la source secondaire, si ladite au moins une valeur de différence de puissance courante est positive ou nulle ;
   - transmettre, à la source secondaire, un ordre de fournir au moins une valeur de puissance chargée égale à ladite au moins une valeur de différence de puissance courante, si ladite au moins une valeur de différence de puissance courante est négative et si ladite au moins une valeur de puissance chargée de la source secondaire est supérieure à ladite au moins une valeur de différence de puissance courante ; et
   - transmettre, à ladite source secondaire, un ordre de fournir l'intégralité de la puissance chargée et transmettre un ordre de limitation transitoire de la puissance consommée courante audit au moins un système consommateur, si ladite au moins une valeur de différence de puissance courante est négative et si ladite au moins une valeur de puissance chargée de la source secondaire est inférieure à ladite au moins une valeur de différence de puissance courante.

Par ailleurs, de préférence, l'unité d'optimisation comporte également un module d'identification configuré pour identifier au moins une valeur de puissance requise réduite à un temps ultérieur à partir de données de limitation d'au moins un besoin de puissance dudit au moins un système consom mateur.

En outre, de manière avantageuse, le système comporte également une unité de contrôle de prélèvement pneumatique comprenant :
- un deuxième module d'acquisition configuré pour acquérir des données de prélèvement pneumatique courantes associées à une quantité de prélèvement pneumatique courant sur ledit au moins un moteur de l'aéronef et sur ladite au moins une source auxiliaire ;
- un troisième module d'acquisition configuré pour acquérir des informations d'arrêt de prélèvement pneumatique si une requête d'arrêt de prélèvement pneumatique est reçue par au moins un système de prélèvement ;
- un second module de calcul configuré pour calculer au moins une valeur de prélèvement pneumatique estimée au temps ultérieur à partir des données de prélèvement pneumatique courantes et des informations d'arrêt de prélèvement pneumatique ; et
- un module de commande configuré pour commander l'arrêt du prélèvement pneumatique au temps ultérieur par ledit au moins un système de prélèvement en fonction des informations d'arrêt de prélèvement automatique. La présente invention concerne, en outre, un aéronef, en particulier un avion de transport, qui est équipé d'un système de contrôle des prélèvements de puissance tel que précité.

### BRÈVE DESCRIPTION DES FIGURES

Les figures annexées feront bien comprendre comment l'invention peut être réalisée. Sur ces figures, des références identiques désignent des éléments semblables.
[Fig 1] La figure 1 montre schématiquement en perspective un aéronef embarquant un système de contrôle de prélèvement de puissance.
[Fig 2] La figure 2 représente un schéma synoptique d'un système de contrôle de prélèvement de puissance illustrant un mode de réalisation de l'invention.
[Fig 3A-3B] Les figures 3A et 3B représentent un schéma synoptique d'une unité d'optimisation d'un système de contrôle de prélèvement de puissance illustrant respectivement un premier mode de réalisation particulier et un second mode de réalisation particulier.
[Fig 4] La figure 4 illustre schématiquement un procédé de contrôle de prélèvement de puissance comprenant une succession d'étapes, selon un mode de réalisation.
[Fig 5A-5B] Les figures 5A et 5B illustrent schématiquement une étape d'optimisation d'un procédé de contrôle de prélèvement de puissance comprenant une succession d'étapes, selon, respectivement, un premier mode de réalisation particulier et un second mode de réalisation particulier.

### DESCRIPTION DÉTAILLÉE

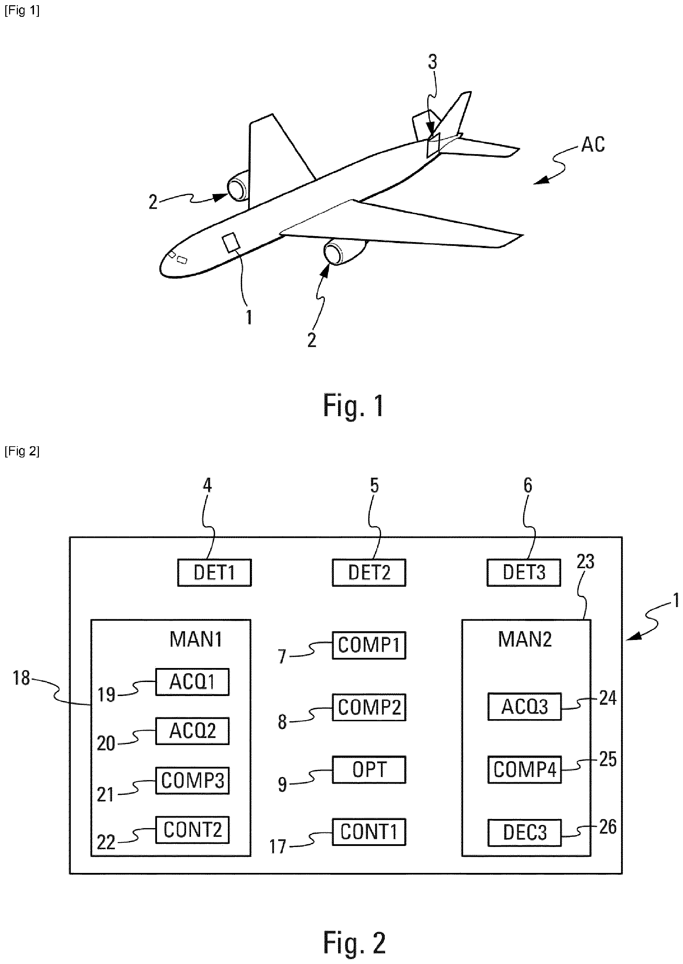

Le système de contrôle de prélèvement de puissance 1 (ci-après « système 1 »), représenté schématiquement dans un mode de réalisation sur la figure 2, est destiné à contrôler les prélèvements et la distribution de la puissance produite par un ou des moteurs 2 d'un aéronef AC, en particulier d'un avion de transport (figure 1).

Dans le cadre de la présente invention, on entend par « prélèvement de puissance » le recueil sur le ou les moteurs 2 d'une partie de la puissance qu'ils produisent afin d'alimenter des réseaux de puissance hydraulique, électrique et pneumatique. Les prélèvements de puissance pneumatique font référence à une alimentation du réseau pneumatique, alors que les prélèvements de puissance mécanique font référence à l'alimentation des réseaux hydraulique et électrique.

Comme représenté sur la figure 2, le système 1 comporte une unité de détermination DET1 4 (DET pour « détermination unit » en anglais) qui est configurée pour déterminer une valeur de puissance disponible courante.

Cette valeur de puissance disponible courante est déterminée en temps réel à partir de données de capacité de prélèvement de puissance courantes sur le ou les moteurs 2 de l'aéronef AC et sur une source auxiliaire de puissance 3. À titre d'exemple, la source auxiliaire de puissance 3 est un groupe auxiliaire de puissance (« Auxiliary Power Unit » ou APU en anglais), un groupe supplémentaire de puissance (« Supplementary Power Unit » ou SPU en anglais), un groupe de parc (« Ground Cart » en anglais). Les données de capacité de prélèvement de puissance sont fournies par le ou les moteurs 2 et la ou les sources auxiliaires de puissance 3. Elles peuvent être associées soit à des prélèvements de puissance pneumatique courants, soit à des prélèvements de puissance mécanique courants, soit aux deux.

Dans un mode de réalisation préféré, le système 1 comporte également une unité de détermination DET2 5. Cette unité de détermination 5 est configurée pour déterminer une valeur de puissance consommée courante à partir de données de puissance courantes représentatives des besoins de puissance d'au moins un système consommateur de l'aéronef AC.

Dans le cadre de la présente invention, on entend par « système consommateur », tout système de l'aéronef AC dont le fonctionnement nécessite de la puissance. Cette puissance peut être mécanique ou pneumatique. À titre d'exemple, le système de régulation climatique (« Environmental Control System » en anglais ou ECS) qui gère l'air pressurisé en cabine est un système consommateur dont la puissance nécessaire au fonctionnement est associée à un besoin de puissance qui est fournie par des prélèvements de puissance pneumatique sur le moteur 2.

Par ailleurs, les besoins de puissance d'un système consommateur comprennent, au moins :
- des besoins de puissance à gestion décentralisée. Il s'agit de besoins de puissance gérés par des systèmes consommant beaucoup de puissance et comprenant leur propre système de gestion de puissance. À titre d'exemple, le système de régulation climatique comprend des besoins de puissance à gestion décentralisée ;
- des besoins de puissance essentiels au fonctionnement d'un système consommateur et non prévisibles temporellement. À titre d'exemple, le fonctionnement des systèmes de contrôle de vol est essentiel et peut nécessiter des pics de puissance instantanément ;
- des besoins de puissance essentiels au fonctionnement d'un système consommateur et prévisibles temporellement. À titre d'exemple, la sortie du train d'atterrissage nécessite une valeur de puissance qui peut être anticipée par le système qui contrôle la sortie des trains ; et
- des besoins de puissance qui ne sont pas essentiels au fonctionnement d'un système consommateur et non prévisibles temporellement.

Comme représenté sur la figure 2, le système 1 comprend, de plus, une unité de détermination DET3 6 qui est configurée pour déterminer au moins une valeur de variation de puissance requise à un temps ultérieur.

Dans le cadre de la présente invention, on entend par « temps ultérieur » un temps postérieur temporellement au temps d'acquisition de données courantes (temps courant). À titre d'exemple, la durée entre le temps ultérieur et le temps courant est de l'ordre de cinq secondes. La ou les valeurs de variation de puissance requise au temps ultérieur sont déterminées à partir des données de puissance courantes et de données de puissance estimées au temps ultérieur. La ou les données de puissance estimées représentent une estimation des besoins du ou des systèmes consommateurs au temps ultérieur. À titre d'exemple, le calcul de l'estimation est basé sur un modèle prédéterminé. Le modèle prédéterminé permet d'estimer les besoins à gestion décentralisée, les besoins essentiels et prévisibles temporellement et les besoins non essentiels et prévisibles temporellement, au temps ultérieur, à partir des données de puissance courantes.

Dans un mode de réalisation préféré, le système 1 comporte une unité de calcul COMP1 7 (COMP pour « computation unit » en anglais) qui est configurée pour calculer au moins une valeur de puissance totale requise au temps ultérieur. Cette ou ces valeurs de puissance totale requise sont associées à une estimation de la puissance qui serait consommée au temps ultérieur par des systèmes consommateurs. Cette valeur de puissance totale requise est calculée à partir de la valeur de puissance consommée courante transmise par l'unité de détermination 5 et la valeur de variation de puissance requise transmise par l'unité de détermination 6.

Par ailleurs, comme représenté sur la figure 2, le système 1 comporte également une unité de calcul COMP2 8. Cette unité de calcul 8 est configurée pour calculer une valeur de puissance disponible estimée au temps ultérieur. Cette valeur de puissance disponible estimée représente l'estimation de la puissance que le ou les moteurs 2 et la source auxiliaire de puissance 3 peuvent fournir au temps ultérieur par le modèle prédéterminé. Cette valeur de puissance disponible estimée est calculée à partir de la valeur de puissance disponible courante transmise par l'unité de détermination 4. Cette valeur de puissance disponible estimée peut également être calculée à partir d'une valeur de prélèvement pneumatique estimée au temps ultérieur et en fonction d'au moins un critère d'estimation. À titre d'exemple, le critère d'estimation est associé à un critère d'absence de modification du ralenti d'au moins un moteur 2.

Le système 1 comporte, de plus, une unité d'optimisation OPT 9 (OPT pour « optimization unit » en anglais) qui est configurée pour déterminer un résultat d'optimisation représentatif d'une comparaison de la valeur de puissance totale requise estimée calculée par l'unité de calcul 7 avec une valeur de puissance associée à au moins un critère d'optimisation.

Dans un premier mode de réalisation de l'unité d'optimisation 9, le critère d'optimisation représente un critère d'adaptation de la poussée des moteurs 2 aux prélèvements de puissance en limitant la réduction des besoins des systèmes consommateurs. Le critère d'optimisation, dans ce premier mode de réalisation, peut également représenter un critère d'adaptation du ou des moteurs 2 et de la source auxiliaire 3 à un arrêt des prélèvements de puissance pneumatique exécuté à un temps ultérieur.

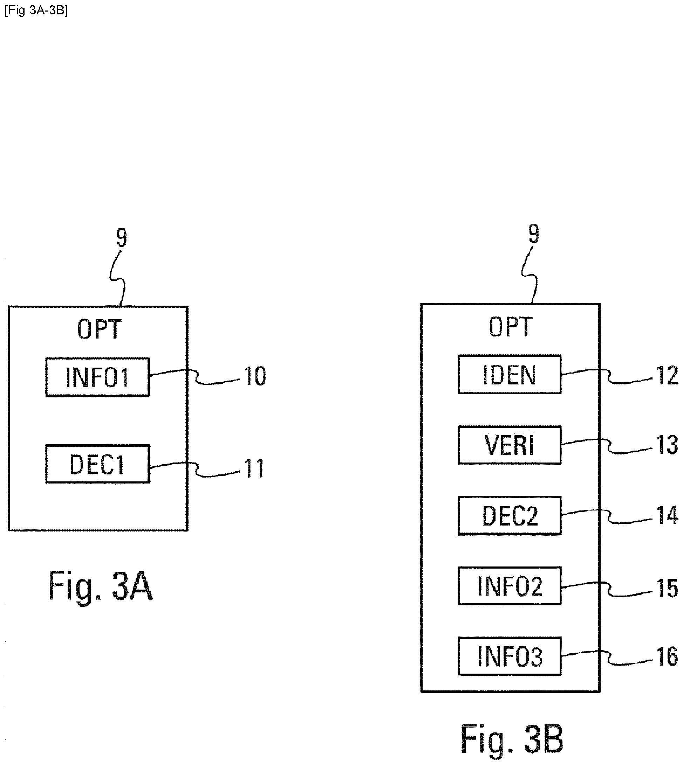

Dans ce premier mode de réalisation, la valeur de puissance associée au critère d'optimisation est représentée par la valeur de puissance disponible estimée transmise par l'unité de calcul 8. Comme représenté sur la figure 3A, l'unité d'optimisation 9 comporte un module d'information INFO1 10 (INFO pour « information unit » en anglais) configuré pour déterminer une requête de confirmation que le ou les systèmes consommateurs recevront, au temps ultérieur, la valeur de puissance totale requise estimée calculée par l'unité de calcul 7. Le module d'information 10 est également configuré pour transmettre la requête de confirmation aux systèmes consommateurs. L'unité d'optimisation 9 comporte, également, un module de décision DEC1 11 (DEC pour « decision unit » en anglais). Le module de décision 11 est configuré pour comparer la valeur de puissance disponible estimée fournie par l'unité de calcul 8 et la valeur de puissance totale requise estimée fournie par l'unité de calcul 7.

Si la valeur de puissance disponible estimée est obtenue à partir d'une valeur de puissance disponible courante dépendant de données de capacité de prélèvements de puissance mécanique et qui est déterminée par l'unité de détermination 4, le module de décision 11 est également apte à :
- déterminer une requête de réduction du ralenti du moteur 2, si la valeur de puissance disponible estimée est supérieure à la valeur de puissance totale requise estimée ;
- déterminer une requête de maintien du ralenti du moteur 2, si la valeur de puissance disponible estimée est égale à la valeur de puissance totale requise estimée ; et
- déterminer une requête d'augmentation du ralenti du moteur 2 pour s'adapter aux besoins de puissance des systèmes consommateurs, si la valeur de puissance disponible estimée est inférieure à la valeur de puissance totale requise estimée.

Si la valeur de puissance disponible estimée est estimée à partir de la valeur de puissance disponible courante en fonction de données de capacité de prélèvements de puissance pneumatique et calculée par l'unité de détermination 4, le module de décision 11 est apte à :
- déterminer une requête d'augmentation du ralenti du moteur 2, si la valeur de puissance disponible estimée est inférieure à la valeur de puissance totale requise estimée ;
- déterminer une requête de maintien du ralenti du moteur 2, si la valeur de puissance disponible estimée est égale à la valeur de puissance totale requise estimée ; et
- déterminer une requête de réduction du ralenti du moteur 2 pour s'adapter aux besoins de puissance des systèmes consommateurs, si la valeur de puissance disponible estimée est supérieure à la valeur de puissance totale requise estimée.

Le résultat d'optimisation représente la requête de réduction du ralenti, la requête de maintien du ralenti, ou la requête d'augmentation du ralenti.

Dans ce premier mode de réalisation préféré, le système 1 comprend une unité de commande CONT1 17 (CONT pour « control unit » en anglais) qui est configurée pour :
- émettre un ordre de réduire le ralenti du ou de moteurs 2 de l'aéronef AC, si le résultat d'optimisation est associé à une requête de réduction du ralenti;
- émettre un ordre d'augmenter le ralenti du ou des moteurs de l'aéronef AC, si le résultat d'optimisation est associé à une requête d'augmenter le ralenti ; et
- n'émettre aucun ordre, si le résultat d'optimisation est associé à une requête de maintien de ralenti.

Dans un second mode de réalisation de l'unité d'optimisation 9, le critère d'optimisation représente un critère d'atteindre une valeur de poussée prédéterminée. La valeur de puissance prédéterminée associée à ce critère d'optimisation représente une valeur de poussée cible.

La valeur de poussée cible est fournie par des calculateurs de l'aéronef AC en charge du calcul de la poussée. Ce calcul de poussée peut être réalisé en mode manuel au travers de la manette des gaz ou en mode automatique par l'intermédiaire de l'automanette. Comme représenté sur la figure 3B, dans ce second mode de réalisation, l'unité d'optimisation 9 comporte un module de vérification VERI 13 (VERI pour « vérification unit » en anglais). Ce module de vérification 13 est configuré pour vérifier si la valeur de puissance totale requise estimée et la valeur de poussée cible sont compatibles.

Dans le cadre de cette invention, on entend par « compatibilité de puissance » le fait que le moteur 2, produit une puissance suffisante pour permettre des prélèvements de puissance nécessaires aux besoins de puissance des systèmes consommateurs.

Le module de vérification 13 est également configuré pour déterminer et émettre une requête de confirmation du ou des systèmes consommateurs qu'ils recevront, au temps ultérieur, la valeur de puissance totale requise estimée calculée par l'unité de calcul 7 et une requête d'adaptation du moteur 2 à la valeur de poussée cible, si la valeur de poussée cible et la valeur de puissance totale requise estimée sont compatibles. Le module de vérification 13 est configuré pour déterminer et émettre une requête d'incompatibilité, sinon.

Par ailleurs, l'unité d'optimisation 9 comporte un module d'identification IDEN 12 (IDEN pour « identification unit » en anglais) configuré pour identifier une valeur de puissance requise réduite à un temps ultérieur. Cette valeur de puissance requise réduite est identifiée à partir de données de limitation d'un ou de plusieurs besoins à gestion décentralisée de puissance de systèmes consommateurs transmises par le ou les systèmes consommateurs.

L'unité d'optimisation 9 comporte, de plus, un module de décision DEC2 14 qui est configuré, en cas de transmission d'une requête d'incompatibilité par le module de vérification 13, pour :
- déterminer une requête d'atteindre, pour le moteur, la valeur de poussée cible, si la valeur de poussée cible et la valeur de puissance requise réduite identifiée par le module d'identification 12 sont compatibles ; et
- déterminer une requête d'augmenter le ralenti du moteur pour s'adapter à la valeur de puissance requise réduite, si la valeur de poussée cible et la valeur de puissance requise réduite, identifiée par le module d'identification 12, ne sont pas compatibles.

Comme représenté sur la figure 3B, l'unité d'optimisation 9 comporte un module d'information INFO2 15 qui est configuré pour déterminer et émet une requête de limitation de la consommation de puissance pour les besoins de puissance à gestion décentralisée du ou des systèmes consommateurs, si une requête d'incompatibilité entre la valeur de poussée cible et la valeur de puissance totale requise estime a été émise par le module de vérification 13. En outre, l'unité d'optimisation 9 comporte, de plus, un module d'information INFO3 16 qui est configuré pour déterminer et transmettre, soit au pilote soit à un calculateur de gestion de vol de l'aéronef AC, une requête d'utilisation de la ou des sources auxiliaires de puissance et une requête de modification du critère d'optimisation si la valeur de poussée cible et la valeur de puissance requise réduite, identifiée par le module d'identification 12, ne sont pas compatibles.

Dans ce second mode de réalisation, le résultat d'optimisation représente soit la requête d'atteindre, pour le moteur, la valeur de poussée cible, soit la requête d'augmenter le ralenti du moteur pour s'adapter à la valeur de puissance requise réduite.

Dans ce second mode de réalisation préféré, l'unité de commande 17 est configurée pour émettre :
- un ordre d'adaptation du moteur 2 pour atteindre la poussée cible, si une requête d'atteindre la valeur de poussée cible est déterminée par le module de décision 14 ; et
- un ordre d'augmenter le ralenti du moteur 2 pour atteindre la valeur de puissance requise réduite, si une requête d'augmentation du ralenti du moteur est déterminée par le module de décision 14.

L'unité de commande 17 est également configuré pour générer et transmettre, aux systèmes consommateurs, un ordre d'adaptation de la puissance totale requise estimée si une requête de limitation de la consommation de puissance pour les besoins de puissance à gestion décentralisée du ou des systèmes consommateurs est transmise par le module d'information 15.

Comme représenté sur la figure 2, le système 1 comporte, également, une unité de contrôle MAN1 18 (MAN pour « management unit » en anglais) de prélèvement pneumatique. Cette unité de contrôle 18 comprend un module d'acquisition ACQ1 19 (ACQ pour « acquisition unit » en anglais) qui est configuré pour acquérir des données de prélèvement pneumatique courantes. Ces données de prélèvement pneumatique courantes représentent un débit de prélèvement pneumatique courant sur le ou les moteurs 2 de l'aéronef AC et sur la ou les sources auxiliaires de puissance 3. À titre d'exemple, le débit de prélèvement pneumatique courant est compris entre 0 et 2 kilogrammes par seconde. L'unité de contrôle 18 comprend également un module d'acquisition ACQ2 20 qui acquiert des informations relatives au fonctionnement du prélèvement pneumatique ou à l'arrêt du prélèvement pneumatique si une requête d'arrêt de prélèvement pneumatique est reçue par un système de prélèvement.

Par ailleurs, l'unité de contrôle 18 comporte un module de calcul COMP3 21 configuré pour calculer une valeur de prélèvement pneumatique estimée au temps ultérieur à partir des données de prélèvement pneumatique courantes fournies par le module d'acquisition 19 et des informations d'arrêt de prélèvement pneumatique fournies par le module d'acquisition 20. Cette valeur de prélèvement pneumatique estimée est calculée et transmise à l'unité de calcul 8.

L'unité de contrôle 18 comporte, de plus, un module de commande CONT2 22. Ce module de commande 22 est configuré pour commander l'arrêt du prélèvement pneumatique au temps ultérieur si les informations acquises par le module d'acquisition 20 sont associées à une requête d'arrêt du prélèvement pneumatique sur le moteur 2 et/ou sur l'unité auxiliaire de puissance 3.

Comme représenté sur la figure 2, le système 1 comporte une unité de gestion de puissance MAN2 23 qui comprend un module d'acquisition ACQ3 24 configuré pour acquérir une valeur de puissance chargée courante et un état de charge courant d'une source de puissance secondaire. À titre d'exemple, la source de puissance secondaire est une batterie montée à bord de l'aéronef AC. La valeur de puissance chargée courante représente la valeur de puissance que peut fournir la batterie. L'unité de gestion de puissance 23 comprend également un module de calcul COMP4 25 qui calcule une valeur de différence de puissance courante. Cette valeur de différence de puissance courante représente la différence entre la valeur de puissance disponible courante fournie par l'unité de détermination 4 et la valeur de puissance consommée courante fournie par l'unité de détermination 5. L'unité de gestion de puissance 23 comporte, de plus, un module de décision DEC3 26 qui est configuré pour :
- émettre un ordre de charge de la batterie, si la valeur de différence de puissance courante est positive ou nulle. Cette situation représente le cas où il y a plus de puissance produite que de puissance consommée par des systèmes consommateurs ;
- transmettre, à la batterie, un ordre de fournir une valeur de puissance chargée égale à la valeur de différence de puissance courante, si cette valeur de différence de puissance courante est négative et si la valeur de puissance chargée de la batterie est supérieure à la valeur de différence de puissance courante. La puissance chargée dans la batterie permet de combler le déficit entre les besoins de puissances des systèmes consommateurs et la puissance disponible ; et
- transmettre, à la batterie un ordre de fournir l'intégralité de la puissance chargée et transmettre un ordre de limitation transitoire de la puissance consommée courante aux systèmes consommateurs, si la valeur de différence de puissance courante est négative et si la valeur de puissance chargée de la source secondaire est inférieure à la valeur de différence de puissance courante.

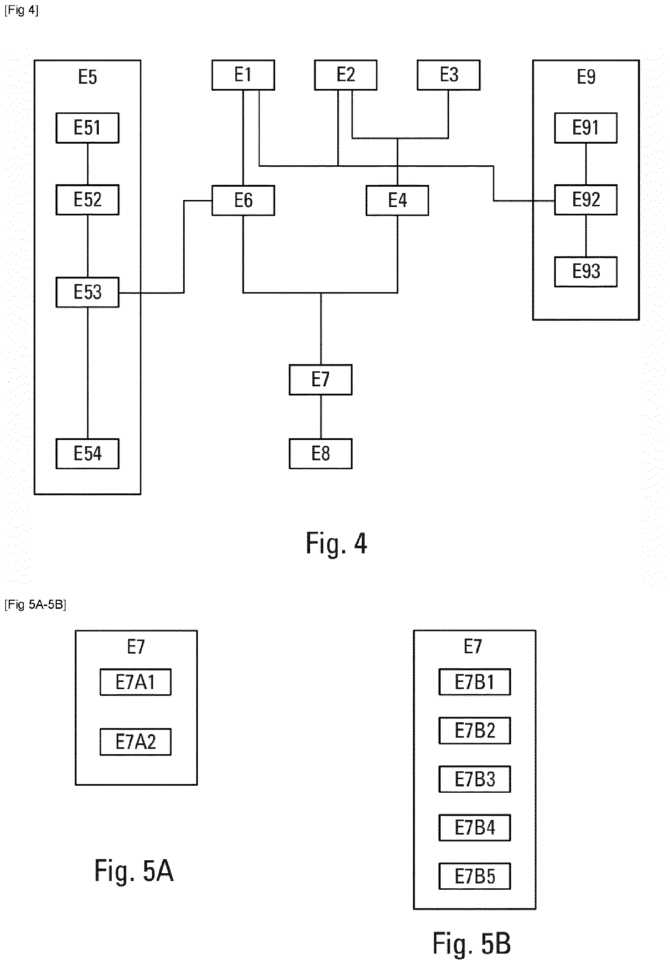

Le système 1, tel que décrit ci-dessus, met en oeuvre un procédé de contrôle de prélèvement de puissance, représenté sur les figures 4, 5A et 5B. Le procédé comprend une succession d'étapes qui sont générées par le système 1 de manière récurrente.

Au cours d'une étape de détermination E1 du procédé, une ou des valeurs de puissance disponible courantes sont déterminées par l'unité de détermination 4. Cette ou ces valeurs de puissance disponible courantes sont obtenues à partir de données de capacité de prélèvement de puissance sur le ou les moteurs 2 et l'unité auxiliaire de puissance 3. Les données de capacité de prélèvement de puissance peuvent être associées soit à des prélèvements mécaniques, soit à des prélèvements pneumatiques, soit aux deux.

Une ou des valeurs de puissance consommée courantes sont également déterminées, lors d'une étape de détermination E2 du procédé par l'unité de détermination 5. Elles sont déterminées à partir de données de puissance courante qui sont fournies par les systèmes consommateurs. Cette ou ces valeurs représentent la consommation de puissance, en temps réel, des systèmes consommateurs de l'aéronef AC.

Au cours d'une étape de détermination E3 du procédé, une valeur de variation de la puissance requise par les systèmes consommateurs est déterminée. Cette valeur de variation représente la différence entre une valeur de puissance consommée estimée à un temps ultérieur par certains systèmes consommateurs et la valeur de puissance consommée courante. La valeur de puissance consommée estimée au temps ultérieur est fournie par un modèle prédéterminé d'estimation de puissance.

L'unité de calcul 7 calcule, lors d'une étape de calcul E4 du procédé, une valeur de puissance totale requise estimée au temps ultérieur par les systèmes consommateurs. Cette valeur de puissance totale requise estimée est obtenue à partir de la valeur de puissance consommée courante déterminée par l'unité de détermination 5 et la valeur de puissance disponible courante déterminée par l'unité de détermination 4.

Comme représenté sur la figure 4, après l'étape de détermination E2, est réalisée une étape de contrôle E5 du procédé de prélèvement pneumatique. L'étape de contrôle E5 de prélèvement pneumatique comprend la succession de sous-étapes E51, E52, E53 et E54.

Au cours de la sous-étape E51 d'acquisition, des données relatives aux prélèvements pneumatiques sur le moteur 2 de l'aéronef AC et sur la source auxiliaire de puissance 3 par un système de prélèvement sont acquises par le module d'acquisition 19. Ces données de prélèvement pneumatique sont associées à une quantité de prélèvement pneumatique telle qu'une quantité d'air ou une quantité de puissance prélevée par le réseau pneumatique. Le module d'acquisition 20 acquiert, au cours de la sous-étape E52 d'acquisition des informations relatives au fonctionnement ou à une requête d'arrêt de prélèvement pneumatique. Ces informations sont associées à la réception d'une requête d'arrêt du prélèvement pneumatique par le système de prélèvement ou à l'absence de requête. Au cours de la sous-étape de calcul E53, le module de calcul 21 calcule une valeur de prélèvement pneumatique estimée au temps ultérieur représentant la partie de puissance qui serait fournie par le réseau pneumatique au temps ultérieur. Le module de calcul 21 calcule cette valeur de prélèvement pneumatique à partir des données de prélèvement pneumatique courant acquis par le module d'acquisition 19 et les informations d'arrêt de prélèvement pneumatique acquis par le module d'acquisition 20. Qu'une requête d'arrêt de prélèvement pneumatique ait été reçue ou non par le système de prélèvement ou pas, le module de calcul 21 calcule la valeur de prélèvement pneumatique estimée et la transmet à l'unité de calcul 8.

L'arrêt de prélèvement pneumatique n'est pas exécuté immédiatement par le système de prélèvement mais au cours de la sous-étape E54 de commande au temps ultérieur afin de laisser le temps nécessaire au moteur 2 d'adapter son ralenti.

L'unité de calcul 8 calcule, lors d'une étape de calcul E6 du procédé, une valeur de puissance disponible estimée au temps ultérieur. Cette valeur de puissance disponible estimée au temps ultérieur est obtenue à partir de la valeur de puissance disponible courante déterminée par l'unité de détermination 4 et un critère d'estimation. Le critère d'estimation est, par exemple, un critère relatif à un ralenti constant du moteur 2. Cette valeur de puissance disponible estimée est également calculée à partir de la valeur de prélèvement pneumatique estimée au temps ultérieur et calculée par le module de calcul 21.

En comparant la valeur de puissance totale requise estimée au temps ultérieur calculée par l'unité de calcul 4 avec une valeur de puissance associée à un ou plusieurs critères d'optimisation, lors d'une étape d'optimisation E7 du procédé, l'unité d'optimisation 8 détermine un résultat d'optimisation.

Dans le premier mode de réalisation, le critère d'optimisation représente un critère d'adaptation de la poussée des moteurs 2 aux prélèvements de puissance en limitant la réduction des besoins des systèmes consommateurs, ou un critère d'adaptation du ou des moteurs 2 et de la source auxiliaire 3 à un arrêt des prélèvements de puissance pneumatique exécuté à un temps ultérieur. La valeur de puissance associée au critère d'optimisation, de ce premier mode de réalisation, est représentée par la valeur de puissance disponible estimée transmise par l'unité de calcul 8.

Comme représenté sur la figure 5A, l'étape d'optimisation E7 comprend les sous-étapes E7A1 et E7A2 suivantes.

Au cours de la sous-étape E7A1 d'information, le module d'information 10 détermine et transmet aux systèmes consommateurs une requête de confirmations qu'ils recevront, au temps ultérieur la valeur de puissance requise afin de combler leurs besoins de puissance.

Parallèlement, si la valeur de puissance disponible estimée est calculée à partir d'une valeur de puissance disponible courante dépendant de données de capacité de prélèvements de puissance mécanique et déterminée par l'unité de détermination 4, le module de décision 11 détermine, au cours de la sous-étape E7A2 :
- une requête de réduction du ralenti du moteur 2, si la valeur de puissance disponible estimée est supérieure à la valeur de puissance totale requise estimée ;
- une requête de maintien du ralenti du moteur 2, si la valeur de puissance disponible estimée est égale à la valeur de puissance totale requise estimée ; et
- une requête d'augmentation du ralenti du moteur 2 pour s'adapter aux besoins de puissance des systèmes consommateurs, si la valeur de puissance disponible estimée est inférieure à la valeur de puissance totale requise estimée.

Si la valeur de puissance disponible estimée est obtenue à partir d'une valeur de puissance disponible courante calculée par l'unité de détermination 4 et dépendant de données de capacité de prélèvements de puissance mécanique, le module de décision 11 détermine, au cours de la sous-étape E7A2 :
- une requête d'augmentation du ralenti du moteur 2, si la valeur de puissance disponible estimée est inférieure à la valeur de puissance totale requise estimée ;
- une requête de maintien du ralenti du moteur 2, si la valeur de puissance disponible estimée est égale à la valeur de puissance totale requise estimée ; et
- une requête de réduction du ralenti du moteur 2 pour s'adapter aux besoins de puissance des systèmes consommateurs, si la valeur de puissance disponible estimée est supérieure à la valeur de puissance totale requise estimée.

Le résultat d'optimisation qui représente la requête d'augmentation, de maintien ou de réduction déterminée par le module de décision 11 est transmis à l'unité de commande 17.

Lors d'une étape de commande E8 du procédé, l'unité de commande 17 transmet aux moteurs 2 :
- un ordre de réduire le ralenti, si le résultat d'optimisation est associé à une requête de réduire le ralenti;
- un ordre d'augmenter le ralenti, si le résultat d'optimisation est associé à une requête d'augmenter le ralenti ; et
- aucun ordre, si le résultat d'optimisation est associé à une requête de maintien de ralenti.

L'ordre d'adaptation du ralenti du ou des moteurs 2 est transmis aux moteurs 2 qui utilisent la durée entre le temps ultérieur et le temps courant pour adapter leurs ralentis.

Dans le second mode de réalisation, le critère d'optimisation représente le critère d'atteindre une valeur de poussée prédéterminée associée à une valeur de poussée cible. Comme représenté sur la figure 5B, l'étape d'optimisation E7 comprend la succession de sous-étapes E7B1, E7B2, E7B3, E7B4 et E7B5.

Lors de la sous-étape E7B1 d'identification, le module d'identification 12 identifie, à partir de données de limitation de besoins à gestion décentralisée de systèmes consommateurs, une valeur de puissance requise réduite. Cette valeur de puissance requise réduite représente la valeur de puissance dont les systèmes consommateurs auront besoin pour fonctionner au temps ultérieur en ayant réduit la consommation de certains de ces besoins. Les données de limitation sont fournies par le ou les systèmes consommateurs comprenant des besoins à gestion décentralisée.

Le module de vérification 13, au cours de la sous-étape E7B2, vérifie si la valeur de puissance totale requise estimée et la valeur de poussée cible sont compatibles.

Si les deux valeurs sont compatibles, le module de vérification 13 détermine une requête de confirmation que les systèmes consommateurs recevront, au temps ultérieur, la valeur de puissance totale requise estimée qui est calculée par l'unité de calcul 7 et une requête d'adaptation du moteur 2 à la valeur de puissance de poussée. Le module de vérification 13 transmet la requête de confirmation aux systèmes consommateurs et la requête d'adaptation du ralenti à l'unité de commande 17.

Si la valeur de puissance totale requise estimée et la valeur de poussée cible ne sont pas compatibles, le module de vérification 13 détermine et émet une requête d'incompatibilité.

Au cours de la sous-étape E7B3 de décision, le module de décision 14 détermine, en cas de transmission d'une requête d'incompatibilité par le module de vérification 13 :
- une requête d'atteindre, pour le moteur, la valeur de poussée cible, si la valeur de poussée cible et la valeur de puissance requise réduite, identifiée par le module d'identification 12, sont compatibles ; et
- une requête d'augmenter le ralenti du moteur pour s'adapter à la valeur de puissance requise réduite, si la valeur de poussée cible et la valeur de puissance requise réduite, identifiée par le module d'identification 12, ne sont pas compatibles.

Si une requête d'atteindre la valeur de poussée cible est déterminée par le module de décision 14, l'unité de commande 17 génère un ordre d'adaptation du moteur 2 pour atteindre la poussée cible.

Si une requête d'augmentation du ralenti du moteur est déterminée par le module de décision 14, l'unité de commande 17 génère un ordre d'augmenter le ralenti du moteur 2 pour atteindre la valeur de puissance requise réduite.

Par ailleurs, si le module d'information 15 reçoit la requête d'incompatibilité transmise par le module de vérification 13, il détermine, au cours de la sous-étape E7B4 d'information, une requête de limitation de la consommation de puissance pour les besoins à gestion décentralisée du ou des systèmes consommateurs, et transmet cette requête de limitation à l'unité de commande 17. L'unité de commande 17 génère et transmet alors, aux systèmes consommateurs, un ordre d'adaptation de la puissance totale requise estimée

La durée entre le temps courant et le temps ultérieur est utilisée par les systèmes consommateurs pour limiter leurs besoins à gestion décentralisée si une requête de limitation est transmise. La durée entre le temps courant et le temps ultérieur est également utilisée par le moteur 2 pour adapter son ralenti. Comme représenté sur la figure 5B, si la valeur de poussée cible et la valeur de puissance requise réduite, identifiée par le module d'identification 12, ne sont pas compatibles, le module d'information 16 détermine et transmettre à l'aéronef AC une requête d'utilisation de la ou des sources auxiliaires de puissance 3 et une requête de modification du critère d'optimisation. L'utilisation d'une source auxiliaire de puissance 3 peut aider le moteur à produire la puissance nécessaire aux besoins limités des systèmes consommateurs et atteindre la poussée cible.

Par ailleurs, après l'étape de détermination E2, une étape de gestion de puissance E9 du procédé est mise en oeuvre par l'unité de gestion de puissance 23. Cette étape de gestion de puissance E9 est mise en oeuvre de manière répétée. La durée entre deux répétitions est comprise, par exemple, entre dix millisecondes et deux cent millisecondes.

L'étape de gestion de puissance E9 comprend la succession de sous-étapes E91, E92 et E93 suivantes. Au cours de la sous-étape d'acquisition E91, la valeur de puissance chargée courante d'une source de puissance secondaire ainsi que son état de charge sont acquis par le module d'acquisition 24. Cette source de puissance secondaire peut être, par exemple, une batterie présente à bord de l'aéronef ou au sol. Une valeur de différence de puissance courante est calculée lors de la sous-étape de calcul E92. Cette valeur de différence représente la différence entre la valeur de puissance disponible courante déterminée à l'étape de détermination E1 par l'unité de détermination 4 et la valeur de puissance consommée déterminée à l'étape de détermination E2 par l'unité de détermination 5. Au cours de la sous-étape de décision E93, le module de décision 26 :
- émet un ordre de charge de la batterie, si la valeur de différence de puissance courante est positive ou nulle ;
- transmet, à la batterie, un ordre de fournir une valeur de puissance chargée égale à la valeur de différence de puissance courante si cette valeur de différence de puissance courante est négative et si la valeur de puissance chargée est supérieure à la valeur de différence de puissance courante. La puissance de la batterie est utilisée pour combler le déficit entre la puissance disponible sur le ou les moteurs 2 et la source auxiliaire de puissance 3 et la puissance consommée par les systèmes consommateurs ; et
- transmet, à la batterie, un ordre de fournir l'intégralité de la valeur de la puissance chargée dans la batterie pour compenser le déficit entre la puissance disponible et la puissance consommée et transmet également, aux systèmes consommateurs, un ordre de limiter transitoirement les besoins des systèmes consommateurs.

Le système 1, tel que décrit ci-dessus, présente les avantages suivants :
- permettre une intégration des moteurs 2 à très haut taux de dilution sans limiter leur optimisation structurelle ; et
- permettre une optimisation de la consommation de puissance, en temps réel, en cas d'utilisations de plusieurs sources de puissance fonctionnant simultanément.

Par ailleurs, le système 1 permet l'amélioration des opérations dans le cas de certaines pannes sur l'aéronef AC. En effet, certaines pannes de l'aéronef AC nécessitent de rendre indisponibles certaines fonctionnalités de systèmes consommateurs. Cela est le cas, par exemple, pour les systèmes de divertissement des passagers, dont la puissance nécessaire au fonctionnement peut être limitée de façon transitoire avec un impact sur le confort et/ou le ressenti des passagers. Le système 1 permet de minimiser très fortement cette limitation transitoire ce qui la rend imperceptible pour les passagers.

En outre, le système 1 permet également de diminuer la poussée ralentie qui représente la poussée minimale nécessaire pour assurer à la fois la stabilité du moteur 2 et les prélèvements de puissance. Diminuer la poussée ralentie apporte les avantages suivants :
- une diminution de la consommation estimée à environ 0,5% de la consommation totale sur une mission standard (800 nm) ;
- un meilleur contrôle au sol de l'aéronef AC ;
- une diminution de l'usure des freins ;
- un meilleur taux de descente, qui permet d'être compatible avec certaines contraintes opérationnelles imposées par l'aéroport, les règles de contrôle aérien, etc ;
- une réduction de la durée du palier de décélération, permettant de réduire la durée totale de vol ; et
- une réduction de l'utilisation des aérofreins pour ralentir l'aéronef AC au cours de la phase de descente, avec pour conséquences une diminution de la charge de travail du pilote, du bruit et possiblement des coûts de maintenance.

## Revendications

1. Procédé de contrôle de de régime de ralenti et prélèvement de puissance, ladite puissance étant produite par au moins un moteur (2) d'aéronef (AC), **caractérisé en ce qu'**il comprend la succession d'étapes suivantes :
- une première étape de détermination (E1) mise en oeuvre par une première unité de détermination (4), consistant à déterminer au moins une valeur de puissance disponible courante à partir de données de capacités de prélèvement de puissance courantes sur ledit au moins un moteur (2) de l'aéronef (AC) et sur au moins une source de puissance auxiliaire (3) ;
- une deuxième étape de détermination (E2), mise en oeuvre par une deuxième unité de détermination (5), consistant à déterminer au moins une valeur de puissance consommée courante à partir de données de puissance courantes représentatives des besoins de puissance d'au moins un système consommateur de l'aéronef (AC) ;
- une troisième étape de détermination (E3), mise en oeuvre par une troisième unité de détermination (6), consistant à déterminer au moins une valeur de variation de puissance requise à un temps ultérieur, à partir de données de puissance estimées par ledit au moins un système consommateur et desdites données de puissance courantes, lesdites données de puissance estimées étant représentatives des besoins de puissance dudit au moins un système consommateur à un temps ultérieur ;
- une première étape de calcul (E4), mise en oeuvre par une première unité de calcul (7), consistant à calculer au moins une valeur de puissance totale requise estimée au temps ultérieur à partir de ladite au moins une valeur de puissance consommée courante et de ladite au moins une valeur de variation de puissance requise ;
- une deuxième étape de calcul (E6), mise en oeuvre par une deuxième unité de calcul (8), consistant à calculer au moins une valeur de puissance disponible estimée au temps ultérieur à partir de ladite au moins une valeur de puissance disponible courante, d'au moins une valeur de prélèvement pneumatique estimée au temps ultérieur et en fonction d'au moins un critère d'estimation ;
- une étape d'optimisation (E7), mise en oeuvre par une unité d'optimisation (9), consistant à déterminer un résultat d'optimisation par la comparaison de ladite au moins une valeur de puissance totale requise estimée avec au moins une valeur de puissance associée à au moins un critère d'optimisation ; et
- une étape de commande (E8), mise en oeuvre par une unité de commande (17), consistant à émettre un ordre d'adaptation d'un ralenti dudit au moins un moteur (2), un ordre d'adaptation de la puissance totale requise estimée au temps ultérieur ou aucun ordre en fonction du résultat d'optimisation.

2. Procédé selon la revendication 1,
**caractérisé en ce qu'**il comprend une étape de gestion de puissance (E9), mise en oeuvre par une unité de gestion de puissance (23) après la deuxième étape de détermination (E1), ladite étape de gestion de puissance (E9) comprenant la succession de sous-étapes suivantes :
- une première sous-étape d'acquisition (E91), mise en oeuvre par un premier module d'acquisition (24), consistant à acquérir au moins une valeur de puissance chargée courante et un état de charge courant d'une source de puissance secondaire ;
- une première sous-étape de calcul (E92), mise en oeuvre par un premier module de calcul (25), consistant à calculer au moins une valeur de différence de puissance courante entre ladite au moins une valeur de puissance disponible courante et ladite au moins une valeur de puissance consommée courante ;
- une sous-étape de décision (E93), mise en oeuvre par un module de décision (26), consistant à :
• émettre un ordre de charge de la source secondaire, si ladite au moins une valeur de différence de puissance courante est positive ou nulle ;
• transmettre, à la source secondaire, un ordre de fournir au moins une valeur de puissance chargée égale à ladite au moins une valeur de différence de puissance courante, si ladite au moins une valeur de différence de puissance courante est négative et si ladite au moins une valeur de puissance chargée de la source secondaire est supérieure à ladite au moins une valeur de différence de puissance courante ; et
• transmettre, à ladite source secondaire, un ordre de fournir l'intégralité de la puissance chargée et transmettre un ordre de limitation transitoire de la puissance consommée courante audit au moins un système consommateur, si ladite au moins une valeur de différence de puissance courante est négative et si ladite au moins une valeur de puissance chargée de la source secondaire est inférieure à ladite au moins une valeur de différence de puissance courante.

3. Procédé selon la revendication 1,
**caractérisé en ce que** l'étape d'optimisation (E7) comprend également une sous-étape d'identification (E7B1), mise en oeuvre par un module d'identification (12), consistant à identifier au moins une valeur de puissance requise réduite à un temps ultérieur à partir de données de limitation d'au moins un besoin de puissance dudit au moins un système consommateur.

4. Procédé selon l'une quelconque des revendications précédentes, **caractérisé en ce qu'**il comprend également une étape de contrôle (E5) de prélèvement pneumatique, mise en oeuvre par une unité de contrôle (18) de prélèvement pneumatique en amont de la deuxième étape de calcul (8), ladite étape de contrôle (E5) comprenant la succession de sous-étapes suivantes :
- une deuxième sous-étape d'acquisition (E51), mise en oeuvre par un deuxième module d'acquisition (19), consistant à acquérir des données de prélèvement pneumatique courantes associées à une quantité de prélèvement pneumatique courant sur ledit au moins un moteur (2) de l'aéronef (AC) et sur ladite au moins une source auxiliaire de puissance (3) ;
- une troisième sous-étape d'acquisition (E52), mise en oeuvre par un troisième module d'acquisition (20), consistant à acquérir des informations de commande de prélèvement pneumatique si une requête d'arrêt de prélèvement pneumatique est reçue par au moins un système de prélèvement ;
- une seconde sous-étape de calcul (E53), mise en oeuvre par un second module de calcul (21), consistant à calculer et ladite au moins une valeur de prélèvement pneumatique estimée au temps ultérieur à partir des données de prélèvement pneumatique courantes et des informations de commande de prélèvement pneumatique ; et
- une sous-étape de commande (E54), mise en oeuvre par un module de commande (22), consistant à commander l'arrêt du prélèvement pneumatique au temps ultérieur par ledit au moins un système de prélèvement en fonction des informations de commande de prélèvement automatique.

5. Procédé selon l'une quelconque des revendications précédentes, **caractérisé en ce que** lesdits besoins de puissance d'au moins un système consommateur comprennent, au moins :
- des besoins de puissance à gestion décentralisée ;
- des besoins de puissance essentiels au fonctionnement d'au moins un système consommateur et non prévisibles temporellement ;
- des besoins de puissance essentiels au fonctionnement d'au moins un système consommateur et prévisibles temporellement ; et
- des besoins de puissance qui ne sont pas essentiels au fonctionnement d'au moins un système consommateur et non prévisibles temporellement.

6. Système de contrôle de régime de ralenti et de prélèvement de puissance, ladite puissance étant produite par au moins un moteur (2) d'aéronef (AC), **caractérisé en ce qu'**il comporte :
- une première unité de détermination (4) configurée pour déterminer au moins une valeur de puissance disponible courante à partir de données de capacités de prélèvement de puissance courantes sur ledit au moins un moteur (2) de l'aéronef (AC) et sur au moins une source de puissance auxiliaire (3) ;
- une deuxième unité de détermination (5) configurée pour déterminer au moins une valeur de puissance consommée courante à partir de données de puissance courantes représentatives des besoins de puissance d'au moins un système consommateur de l'aéronef (AC) ;
- une troisième unité de détermination (6) configurée pour déterminer au moins une valeur de variation de puissance requise à un temps ultérieur, à partir de données de puissance estimées par ledit au moins un système consommateur et desdites données de puissance courantes, lesdites données de puissance estimées étant représentatives des besoins de puissance dudit au moins un système consommateur à un temps ultérieur ;
- une première unité de calcul (7) configurée pour calculer au moins une valeur de puissance totale requise estimée au temps ultérieur à partir de ladite au moins une valeur de puissance consommée courante et de ladite au moins une valeur de variation de puissance requise ;
- une deuxième unité de calcul (8) configurée pour calculer au moins une valeur de puissance disponible estimée au temps ultérieur à partir de ladite au moins une valeur de puissance disponible courante, d'au moins une valeur de prélèvement pneumatique estimée au temps ultérieur et en fonction d'au moins un critère d'estimation ;
- une unité d'optimisation (9) configurée pour déterminer un résultat d'optimisation par la comparaison de ladite au moins une valeur de puissance totale requise estimée avec au moins une valeur de puissance associée à au moins un critère d'optimisation ; et
- une unité de commande (17), consistant à émettre un ordre d'adaptation d'un ralenti dudit au moins un moteur (2), un ordre d'adaptation de la puissance totale requise estimée au temps ultérieur ou aucun ordre en fonction du résultat d'optimisation.

7. Système selon la revendication 6,
**caractérisé en ce qu'**il comporte une unité de gestion de puissance (23) comportant :
- un premier module d'acquisition (24) configuré pour acquérir au moins une valeur de puissance chargée courante et un état de charge courant d'une source de puissance secondaire ;
- un premier module de calcul (25) configuré pour calculer au moins une valeur de différence de puissance courante entre ladite au moins une valeur de puissance disponible courante et ladite au moins une valeur de puissance consommée courante ;
- un module de décision (26) configuré pour :
• émettre un ordre de charge de la source secondaire, si ladite au moins une valeur de différence de puissance courante est positive ou nulle ;
• transmettre, à la source secondaire, un ordre de fournir au moins une valeur de puissance chargée égale à ladite au moins une valeur de différence de puissance courante, si ladite au moins une valeur de différence de puissance courante est négative et si ladite au moins une valeur de puissance chargée de la source secondaire est supérieure à ladite au moins une valeur de différence de puissance courante ; et
• transmettre, à ladite source secondaire, un ordre de fournir l'intégralité de la puissance chargée et transmettre un ordre de limitation transitoire de la puissance consommée courante audit au moins un système consommateur, si ladite au moins une valeur de différence de puissance courante est négative et si ladite au moins une valeur de puissance chargée de la source secondaire est inférieure à ladite au moins une valeur de différence de puissance courante.

8. Système selon la revendication 6,
**caractérisé en ce que** l'unité d'optimisation (9) comporte également un module d'identification (12) configuré pour identifier au moins une valeur de puissance requise réduite à un temps ultérieur à partir de données de limitation d'au moins un besoin de puissance dudit au moins un système consommateur.

9. Système selon l'une quelconque des revendications 6 à 8,
**caractérisé en ce qu'**il comporte également une unité de contrôle (18) de prélèvement pneumatique comprenant :
- un deuxième module d'acquisition (19) configuré pour acquérir des données de prélèvement pneumatique courantes associées à une quantité de prélèvement pneumatique courant sur ledit au moins un moteur (2) de l'aéronef (AC) et sur ladite au moins une source auxiliaire (3) ;
- un troisième module d'acquisition (20) configuré pour acquérir des informations de commande de prélèvement pneumatique si une requête d'arrêt de prélèvement pneumatique est reçue par au moins un système de prélèvement ;
- un second module de calcul (21) configuré pour calculer au moins une valeur de prélèvement pneumatique estimée au temps ultérieur à partir des données de prélèvement pneumatique courantes et des informations de commande de prélèvement pneumatique ; et
- un module de commande (22) configuré pour commander l'arrêt du prélèvement pneumatique au temps ultérieur par ledit au moins un système de prélèvement en fonction des informations de commande de prélèvement automatique.

10. Aéronef, **caractérisé en ce qu'**il comporte un système (1) de contrôle de prélèvement de puissance tel que celui spécifié sous l'une quelconque des revendications 6 à 9.

## Patentansprüche

1. Verfahren zur Steuerung einer Leerlaufdrehzahl und einer Leistungsentnahme, wobei die Leistung durch mindestens einen Motor (2) eines Flugzeugs (AC) produziert wird,
**dadurch gekennzeichnet, dass** es die Abfolge folgender Schritte beinhaltet:
- einen ersten Bestimmungsschritt (E1), der von einer ersten Bestimmungseinheit (4) umgesetzt wird und darin besteht, mindestens einen aktuellen Wert verfügbarer Leistung anhand von aktuellen Daten über Leistungsentnahmekapazitäten an dem mindestens einen Motor (2) des Flugzeugs (AC) und an mindestens einer Hilfsleistungsquelle (3) zu bestimmen;
- einen zweiten Bestimmungsschritt (E2), der von einer zweiten Bestimmungseinheit (5) umgesetzt wird und darin besteht, mindestens einen aktuellen Leistungsverbrauchswert anhand von aktuellen Leistungsdaten, die für die Leistungsbedarfe mindestens eines Verbrauchersystems des Flugzeugs (AC) repräsentativ sind, zu bestimmen;
- einen dritten Bestimmungsschritt (E3), der von einer dritten Bestimmungseinheit (6) umgesetzt wird und darin besteht, mindestens einen Wert einer veränderten erforderlichen Leistung zu einem späteren Zeitpunkt anhand von Leistungsdaten, die durch das mindestens eine Verbrauchersystem geschätzt werden, und den aktuellen Leistungsdaten zu bestimmen, wobei die geschätzten Leistungsdaten für die Leistungsbedarfe des mindestens einen Verbrauchersystems zu einem späteren Zeitpunkt repräsentativ sind;
- einen ersten Rechenschritt (E4), der von einer ersten Recheneinheit (7) umgesetzt wird und darin besteht, mindestens einen geschätzten erforderlichen Gesamtleistungswert zu dem späteren Zeitpunkt anhand des mindestens einen aktuellen Leistungsverbrauchswerts und des mindestens einen Werts der veränderten erforderlichen Leistung zu berechnen;
- einen zweiten Rechenschritt (E6), der von einer zweiten Recheneinheit (8) umgesetzt wird und darin besteht, mindestens einen geschätzten Wert verfügbarer Leistung zu dem späteren Zeitpunkt anhand des mindestens einen aktuellen Werts verfügbarer Leistung, mindestens eines geschätzten pneumatischen Entnahmewerts zu dem späteren Zeitpunkt und in Abhängigkeit von mindestens einem Schätzkriterium zu berechnen;
- einen Optimierungsschritt (E7), der von einer Optimierungseinheit (9) umgesetzt wird und darin besteht, ein Optimierungsergebnis durch den Vergleich des mindestens einen geschätzten erforderlichen Gesamtleistungswert mit mindestens einem Leistungswert, der mit mindestens einem Optimierungskriterium assoziiert ist, zu bestimmen; und
- einen Ansteuerungsschritt (E8), der von einer Ansteuerungseinheit (17) umgesetzt wird und darin besteht, in Abhängigkeit von dem Optimierungsergebnis einen Befehl zur Anpassung eines Leerlaufs des mindestens einen Motors (2), einen Befehl zur Anpassung der geschätzten erforderlichen Gesamtleistung zu dem späteren Zeitpunkt oder keinen Befehl auszugeben.

2. Verfahren nach Anspruch 1,
**dadurch gekennzeichnet, dass** es einen Leistungsverwaltungsschritt (E9) beinhaltet, der nach dem zweiten Bestimmungsschritt (E1) von einer Leistungsverwaltungseinheit (23) umgesetzt wird, wobei der Leistungsverwaltungsschritt (E9) die Abfolge folgender Teilschritte beinhaltet:
- einen ersten Erfassungsteilschritt (E91), der von einem ersten Erfassungsmodul (24) umgesetzt wird und darin besteht, mindestens einen aktuellen Ladeleistungswert und einen aktuellen Ladezustand einer sekundären Leistungsquelle zu erfassen;
- einen ersten Rechenteilschritt (E92), der von einem ersten Rechenmodul (25) umgesetzt wird und darin besteht, mindestens einen aktuellen Leistungsdifferenzwert zwischen dem mindestens einen aktuellen Wert verfügbarer Leistung und dem mindestens einen aktuellen Leistungsverbrauchswert zu berechnen;
- einen Entscheidungsteilschritt (E93), der von einem Entscheidungsmodul (26) umgesetzt wird und aus Folgendem besteht:
• Ausgeben eines Befehls zum Laden der sekundären Quelle, wenn der mindestens eine aktuelle Leistungsdifferenzwert positiv oder null ist;
• Übertragen, an die sekundäre Quelle, eines Befehls zum Liefern mindestens eines Ladeleistungswerts, der gleich dem mindestens einen aktuellen Leistungsdifferenzwert ist, wenn der mindestens eine aktuelle Leistungsdifferenzwert negativ ist und wenn der mindestens eine Ladeleistungswert der sekundären Quelle größer als der mindestens eine aktuelle Leistungsdifferenzwert ist; und
• Übertragen, an die sekundäre Quelle, eines Befehls zum Liefern der gesamten Ladeleistung und Übertragen eines Befehls zur vorübergehenden Begrenzung der aktuellen Verbrauchsleistung an das mindestens eine Verbrauchersystem, wenn der mindestens eine aktuelle Leistungsdifferenzwert negativ ist und wenn der mindestens eine Ladeleistungswert der sekundären Quelle kleiner als der mindestens eine aktuelle Leistungsdifferenzwert ist.

3. Verfahren nach Anspruch 1,
**dadurch gekennzeichnet, dass** der Optimierungsschritt (E7) ferner einen Identifikationsteilschritt (E7B1) beinhaltet, der von einem Identifikationsmodul (12) umgesetzt wird und darin besteht, mindestens einen reduzierten erforderlichen Leistungswert zu einem späteren Zeitpunkt anhand von Daten zur Begrenzung mindestens eines Leistungsbedarfs des mindestens einen Verbrauchersystems zu identifizieren.

4. Verfahren nach einem beliebigen der vorhergehenden Ansprüche,
**dadurch gekennzeichnet, dass** es ferner einen Schritt des Steuerns (E5) der pneumatischen Entnahme beinhaltet, der von einer Einheit zum Steuern (18) der pneumatischen Entnahme im Vorfeld des zweiten Rechenschritts (8) umgesetzt wird, wobei der Steuerschritt (E5) die Abfolge folgender Teilschritte beinhaltet:
- einen zweiten Erfassungsteilschritt (E51), der von einem zweiten Erfassungsmodul (19) umgesetzt wird und darin besteht, aktuelle Daten zur pneumatischen Entnahme, die mit einer aktuellen pneumatischen Entnahmemenge an dem mindestens einen Motor (2) des Flugzeugs (AC) und an der mindestens einen Hilfsleistungsquelle (3) assoziiert sind, zu erfassen;
- einen dritten Erfassungsteilschritt (E52), der von einem dritten Erfassungsmodul (20) umgesetzt wird und darin besteht, Informationen zur Ansteuerung der pneumatischen Entnahme zu erfassen, wenn von mindestens einem Entnahmesystem eine Anforderung zum Stoppen der pneumatischen Entnahme empfangen wird;
- einen zweiten Rechenteilschritt (E53), der von einem zweiten Rechenmodul (21) umgesetzt wird und darin besteht, den mindestens einen geschätzten pneumatischen Entnahmewert zu dem späteren Zeitpunkt anhand der aktuellen Daten zur pneumatischen Entnahme und der Informationen zur Ansteuerung der pneumatischen Entnahme zu berechnen; und
- einen Ansteuerungsteilschritt (E54), der von einem Ansteuerungsmodul (22) umgesetzt wird und darin besteht, das Stoppen der pneumatischen Entnahme zu dem späteren Zeitpunkt durch das mindestens eine Entnahmesystem in Abhängigkeit von den Informationen zur Ansteuerung der automatischen Entnahme anzusteuern.

5. Verfahren nach einem beliebigen der vorhergehenden Ansprüche,
**dadurch gekennzeichnet, dass** die Leistungsbedarfe mindestens eines Verbrauchersystems mindestens Folgendes beinhalten:
- Leistungsbedarfe unter dezentraler Verwaltung;
- Leistungsbedarfe, die für den Betrieb mindestens eines Verbrauchersystems unentbehrlich und zeitlich unvorhersehbar sind;
- Leistungsbedarfe, die für den Betrieb mindestens eines Verbrauchersystems unentbehrlich und zeitlich vorhersehbar sind; und
- Leistungsbedarfe, die für den Betrieb mindestens eines Verbrauchersystems nicht unentbehrlich und zeitlich unvorhersehbar sind.

6. System zur Steuerung einer Leerlaufdrehzahl und einer Leistungsentnahme, wobei die Leistung durch mindestens einen Motor (2) eines Flugzeugs (AC) produziert wird,
**dadurch gekennzeichnet, dass** es Folgendes umfasst:
- eine erste Bestimmungseinheit (4), die dazu konfiguriert ist, mindestens einen aktuellen Wert verfügbarer Leistung anhand von aktuellen Daten über Leistungsentnahmekapazitäten an dem mindestens einen Motor (2) des Flugzeugs (AC) und an mindestens einer Hilfsleistungsquelle (3) zu bestimmen;
- eine zweite Bestimmungseinheit (5), die dazu konfiguriert ist, mindestens einen aktuellen Leistungsverbrauchswert anhand von aktuellen Leistungsdaten, die für die Leistungsbedarfe mindestens eines Verbrauchersystems des Flugzeugs (AC) repräsentativ sind, zu bestimmen;
- eine dritte Bestimmungseinheit (6), die dazu konfiguriert ist, mindestens einen Wert einer veränderten erforderlichen Leistung zu einem späteren Zeitpunkt anhand von Leistungsdaten, die durch das mindestens eine Verbrauchersystem geschätzt werden, und den aktuellen Leistungsdaten zu bestimmen, wobei die geschätzten Leistungsdaten für die Leistungsbedarfe des mindestens einen Verbrauchersystems zu einem späteren Zeitpunkt repräsentativ sind;
- eine erste Recheneinheit (7), die dazu konfiguriert ist, mindestens einen geschätzten erforderlichen Gesamtleistungswert zu dem späteren Zeitpunkt anhand des mindestens einen aktuellen Leistungsverbrauchswerts und des mindestens einen Werts der veränderten erforderlichen Leistung zu berechnen;
- eine zweite Recheneinheit (8), die dazu konfiguriert ist, mindestens einen geschätzten Wert verfügbarer Leistung zu dem späteren Zeitpunkt anhand des mindestens einen aktuellen Werts verfügbarer Leistung, mindestens eines geschätzten pneumatischen Entnahmewerts zu dem späteren Zeitpunkt und in Abhängigkeit von mindestens einem Schätzkriterium zu berechnen;
- eine Optimierungseinheit (9), die dazu konfiguriert ist, ein Optimierungsergebnis durch den Vergleich des mindestens einen geschätzten erforderlichen Gesamtleistungswert mit mindestens einem Leistungswert, der mit mindestens einem Optimierungskriterium assoziiert ist, zu bestimmen; und
- eine Ansteuerungseinheit (17), die darin besteht, in Abhängigkeit von dem Optimierungsergebnis einen Befehl zur Anpassung eines Leerlaufs des mindestens einen Motors (2), einen Befehl zur Anpassung der geschätzten erforderlichen Gesamtleistung zu dem späteren Zeitpunkt oder keinen Befehl auszugeben.

7. System nach Anspruch 6,
**dadurch gekennzeichnet, dass** es eine Leistungsverwaltungseinheit (23) umfasst, die Folgendes umfasst:
- ein erstes Erfassungsmodul (24), das dazu konfiguriert ist, mindestens einen aktuellen Ladeleistungswert und einen aktuellen Ladezustand einer sekundären Leistungsquelle zu erfassen;
- ein erstes Rechenmodul (25), das dazu konfiguriert ist, mindestens einen aktuellen Leistungsdifferenzwert zwischen dem mindestens einen aktuellen Wert verfügbarer Leistung und dem mindestens einen aktuellen Leistungsverbrauchswert zu berechnen;
- ein Entscheidungsmodul (26), das zu Folgendem konfiguriert ist:
• Ausgeben eines Befehls zum Laden der sekundären Quelle, wenn der mindestens eine aktuelle Leistungsdifferenzwert positiv oder null ist;
• Übertragen, an die sekundäre Quelle, eines Befehls zum Liefern mindestens eines Ladeleistungswerts, der gleich dem mindestens einen aktuellen Leistungsdifferenzwert ist, wenn der mindestens eine aktuelle Leistungsdifferenzwert negativ ist und wenn der mindestens eine Ladeleistungswert der sekundären Quelle größer als der mindestens eine aktuelle Leistungsdifferenzwert ist; und
• Übertragen, an die sekundäre Quelle, eines Befehls zum Liefern der gesamten Ladeleistung und Übertragen eines Befehls zur vorübergehenden Begrenzung der aktuellen Verbrauchsleistung an das mindestens eine Verbrauchersystem, wenn der mindestens eine aktuelle Leistungsdifferenzwert negativ ist und wenn der mindestens eine Ladeleistungswert der sekundären Quelle kleiner als der mindestens eine aktuelle Leistungsdifferenzwert ist.

8. System nach Anspruch 6,
**dadurch gekennzeichnet, dass** die Optimierungseinheit (9) ferner ein Identifikationsmodul (12) umfasst, das dazu konfiguriert ist, mindestens einen reduzierten erforderlichen Leistungswert zu einem späteren Zeitpunkt anhand von Daten zur Begrenzung mindestens eines Leistungsbedarfs des mindestens einen Verbrauchersystems zu identifizieren.

9. System nach einem beliebigen der Ansprüche 6 bis 8, **dadurch gekennzeichnet, dass** es ferner eine Einheit zum Steuern (18) der pneumatischen Entnahme umfasst, die Folgendes beinhaltet:
- ein zweites Erfassungsmodul (19), das dazu konfiguriert ist, aktuelle Daten zur pneumatischen Entnahme, die mit einer aktuellen pneumatischen Entnahmemenge an dem mindestens einen Motor (2) des Flugzeugs (AC) und an der mindestens einen Hilfsquelle (3) assoziiert sind, zu erfassen;
- ein drittes Erfassungsmodul (20), das dazu konfiguriert ist, Informationen zur Ansteuerung der pneumatischen Entnahme zu erfassen, wenn von mindestens einem Entnahmesystem eine Anforderung zum Stoppen der pneumatischen Entnahme empfangen wird;
- ein zweites Rechenmodul (21), das dazu konfiguriert ist, mindestens einen geschätzten pneumatischen Entnahmewert zu dem späteren Zeitpunkt anhand der aktuellen Daten zur pneumatischen Entnahme und der Informationen zur Ansteuerung der pneumatischen Entnahme zu berechnen; und
- ein Ansteuerungsmodul (22), das dazu konfiguriert ist, das Stoppen der pneumatischen Entnahme zu dem späteren Zeitpunkt durch das mindestens eine Entnahmesystem in Abhängigkeit von den Informationen zur Ansteuerung der automatischen Entnahme anzusteuern.

10. Flugzeug, **dadurch gekennzeichnet, dass** es ein System (1) zur Steuerung einer Leistungsentnahme umfasst, wie es in einem beliebigen der Ansprüche 6 bis 9 spezifiziert ist.

## Claims

1. Method for controlling idle speed and power draw, said power being generated by at least one engine (2) of an aircraft (AC),
**characterized in that** it includes the following successive steps:
- a first determination step (E1) implemented by a first determination unit (4), that involves determining at least one current available power value using data on current power draw capacities from said at least one engine (2) of the aircraft (AC) and from at least one auxiliary power source (3),
- a second determination step (E2), implemented by a second determination unit (5), that involves determining at least one current power consumption value using current power data representing the power requirements of at least one consumer system of the aircraft (AC),
- a third determination step (E3), implemented by a third determination unit (6), that involves determining at least one future power requirement variation value, using power data estimated by said at least one consumer system and said current power data, said estimated power data representing the future power requirements of said at least one consumer system,
- a first computation step (E4), implemented by a first computation unit (7), that involves calculating at least one future estimated total power requirement value using said at least one current power consumption value and said at least one power requirement variation value,
- a second computation step (E6), implemented by a second computation unit (8), that involves calculating at least one future estimated available power value on the basis of said at least one current available power value, at least one future estimated pneumatic draw value and as a function of at least one estimate criterion,
- an optimization step (E7), implemented by an optimization unit (9), that involves determining an optimization result by comparing said at least one estimated total power requirement value with at least one power value associated with at least one optimization criterion, and
- a control step (E8), implemented by a control unit (17), that involves issuing an adaptation order of an idle speed of said at least one engine (2), an adaptation order for the future estimated total power requirement or no order as a function of the optimization result.

2. Method according to Claim 1,
**characterized in that** it includes a power management step (E9), implemented by a power management unit (23) following the second determination step (E1), said power management step (E9) including the following successive sub-steps:
- a first acquisition sub-step (E91), implemented by a first acquisition module (24), that involves acquiring at least one current charged power value and a current state of charge of a secondary power source,
- a first computation sub-step (E92), implemented by a first computation module (25), that involves calculating at least one current power difference value between said at least one current available power value and said at least one current power consumption value,
- a decision sub-step (E93), implemented by a decision module (26), that involves:
• issuing an order to charge the secondary source, if said at least one current power difference value is positive or zero,
• sending, to the secondary source, an order to provide at least one charged power value equal to said at least one current power difference value, if said at least one current power difference value is negative and if said at least one charged power value of the secondary source is greater than said at least one current power difference value, and
• sending, to said secondary source, an order to provide all of the charged power and sending a temporary limitation order applicable to the current power consumption to said at least one consumer system, if said at least one current power difference value is negative and if said at least one charged power value of the secondary source is less than said at least one current power difference value.

3. Method according to Claim 1,
**characterized in that** the optimization step (E7) also includes an identification sub-step (E7B1), implemented by an identification module (12), that involves identifying at least one future reduced power requirement value using limitation data on at least one power requirement of said at least one consumer system.

4. Method according to any one of the preceding claims, **characterized in that** it also includes a pneumatic draw management step (E5), implemented by a pneumatic draw management unit (18) upstream of the second computation step (8), said management step (E5) including the following successive sub-steps:
- a second acquisition sub-step (E51) implemented by a second acquisition module (19), that involves acquiring current data on pneumatic draw associated with a current pneumatic draw quantity from said at least one engine (2) of the aircraft (AC) and from said at least one auxiliary power source (3),
- a third acquisition sub-step (E52), implemented by a third acquisition module (20), that involves acquiring pneumatic draw control information if a pneumatic draw stoppage request is received by at least one draw system,
- a second computation sub-step (E53), implemented by a second computation module (21), that involves calculating said at least one future estimated pneumatic draw value using current pneumatic draw data and pneumatic draw control information, and
- a control sub-step (E54), that is implemented by a control module (22), that involves ordering the future stoppage of the pneumatic draw by said at least one draw system as a function of the automatic draw control information.

5. Method according to any one of the preceding claims, **characterized in that** said power requirements of at least one consumer system include at least:
- remotely managed power requirements,
- power requirements essential to operation of at least one consumer system that are not predictable in time,
- power requirements essential to operation of at least one consumer system that are predictable in time, and
- power requirements that are not essential to operation of at least one consumer system and that are not predictable in time.

6. System for controlling idle speed and power draw, said power being generated by at least one engine (2) of an aircraft (AC),
**characterized in that** it includes:
- a first determination unit (4) designed to determine at least one current available power value using data on current power draw capacities from said at least one engine (2) of the aircraft (AC) and from at least one auxiliary power source (3),
- a second determination unit (5) designed to determine at least one current power consumption value using current power data representing the power requirements of at least one consumer system of the aircraft (AC),
- a third determination unit (6) that is designed to determine at least one future power requirement variation value, using power data estimated by said at least one consumer system and said current power data, said estimated power data representing the future power requirements of said at least one consumer system,
- a first computation unit (7) that is designed to calculate at least one future estimated total power requirement value using said at least one current power consumption value and said at least one power requirement variation value,
- a second computation unit (8) that is designed to calculate at least one future estimated available power value on the basis of said at least one current available power value, at least one future estimated pneumatic draw value and as a function of at least one estimate criterion,
- an optimization unit (9) that is designed to determine an optimization result by comparing said at least one estimated total power requirement value with at least one power value associated with at least one optimization criterion, and
- a control unit (17), that involves issuing an adaptation order of an idle speed of said at least one engine (2), an adaptation order for the future estimated total power requirement or no order as a function of the optimization result.

7. System according to Claim 6,
**characterized in that** it includes a power management unit (23) including:
- a first acquisition module (24) that is designed to acquire at least one current charged power value and a current state of charge of a secondary power source,
- a first computation module (25) that is designed to calculate at least one current power difference value between said at least one current available power value and said at least one current power consumption value,
- a decision module (26) designed to:
• issue an order to charge the secondary source, if said at least one current power difference value is positive or zero,
• send, to the secondary source, an order to provide at least one charged power value equal to said at least one current power difference value, if said at least one current power difference value is negative and if said at least one charged power value of the secondary source is greater than said at least one current power difference value, and
• send, to said secondary source, an order to provide all of the charged power and to send a temporary limitation order applicable to the current power consumption to said at least one consumer system, if said at least one current power difference value is negative and if said at least one charged power value of the secondary source is less than said at least one current power difference value.

8. System according to Claim 6,
**characterized in that** the optimization unit (9) also includes an identification module (12) designed to identify at least one future reduced power requirement value using limitation data relating to at least one power requirement of said at least one consumer system.

9. System according to any one of Claims 6 to 8, **characterized in that** it also includes a pneumatic draw management unit (18) including:
- a second acquisition module (19) that is designed to acquire current data on pneumatic draw associated with a current pneumatic draw quantity from said at least one engine (2) of the aircraft (AC) and from said at least one auxiliary source (3),
- a third acquisition module (20) that is designed to acquire pneumatic draw control information if a pneumatic draw stoppage request is received by at least one draw system,
- a second computation module (21) that is designed to calculate at least one future estimated pneumatic draw value using current pneumatic draw data and pneumatic draw control information, and
- a control module (22) that is designed to order the future stoppage of the pneumatic draw by said at least one draw system as a function of the automatic draw control information.

10. Aircraft, **characterized in that** it includes a power draw management system (1) as specified in any one of Claims 6 to 9.
